(19) **Europäisches Patentamt European Patent Office Office européen des brevets**

(11) **EP 1 945 876 B1**

(12) **EUROPEAN PATENT SPECIFICATION**

(45) Date of publication and mention of the grant of the patent:
**15.06.2011 Bulletin 2011/24**

(21) Application number: **06808478.9**

(22) Date of filing: **08.11.2006**

(51) Int Cl.:
*E04C 3/04* (2006.01)     *E04C 3/14* (2006.01)
*B32B 15/08* (2006.01)    *B32B 21/08* (2006.01)
*B32B 27/06* (2006.01)    *B32B 33/00* (2006.01)
*E04B 1/82* (2006.01)     *E04B 1/84* (2006.01)
*E04B 1/94* (2006.01)

(86) International application number:
**PCT/GB2006/004184**

(87) International publication number:
**WO 2007/054699 (18.05.2007 Gazette 2007/20)**

(54) **STRUCTURAL MEMBER COMPRISING SOUND INSULATING LAYER**

EINE SCHALLDÄMMSCHICHT UMFASSENDES TRAGELEMENT

ELEMENT STRUCTUREL COMPRENANT UNE COUCHE D'ISOLATION PHONIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.11.2005 GB 0522750**

(43) Date of publication of application:
**23.07.2008 Bulletin 2008/30**

(60) Divisional application:
**10189731.2 / 2 273 026**

(73) Proprietor: **TIMBER SOUND INSULATION LIMITED Mossley Tameside OL5 0BQ (GB)**

(72) Inventor: **GILL, Raymond Tameside OL5 0BQ (GB)**

(74) Representative: **Harrison Goddard Foote Belgrave Hall Belgrave Street Leeds LS2 8DD (GB)**

(56) References cited:
**EP-A1- 0 726 295     WO-A-2004/031504
DE-A1- 2 726 444     GB-A- 2 383 005**

**Description**

<u>Field of the Invention</u>

This invention relates to a structural member for providing sound insulation in, for example, a wall or floor structure.

<u>Background to the Invention</u>

Floors and partition walls are often constructed by fixing one or more panels to a metal or timber framework. In the case of a partition wall, the framework typically comprises vertical and horizontal structural members (sometimes referred to as "studs" and noggins" respectively), to which the panels are nailed or screwed. Plasterboard is commonly used to construct non-load bearing walls and to line existing wall structures.

The insulation of wall and floor structures against sound transmission is a recognised problem, particularly in multi-storey buildings such as flats and office buildings. Sound insulation is not only generally desirable, but is in many cases necessary in order for planning permission to be obtained.

A variety of materials and techniques for achieving sound insulation have been proposed. Two commonly used materials are foamed materials and dense, non-foamed, polymeric materials. In particular, it is known that the sound insulating properties of a partition wall can be improved by fixing a sheet of a non-foamed, polymeric material to plasterboard panelling.

GB-A-2287086 describes a sound-insulating panel, in particular a flooring panel, comprising a first sheet of relatively dense non-foamed polymeric material fixed to a sheet of relatively less dense and substantially resilient compressible material. The non-foamed material may be mineral loaded polyvinyl chloride ("PVC") and the compressible material may be chip foam.

GB-A-2375358 describes a sound attenuating board comprising a sheet of polymeric material (e.g. mineral loaded PVC) sandwiched between first and second panels made of plaster or cement. The panels differ in thickness or composition so that all three layers of the board have different sound attenuating properties.

US 5639545 describes a sound insulating material comprising a polymeric component, a mineral filler, a compatibilising agent (e.g. ricinoleic acid) and a tackifier (e.g. pine rosin).

Although polymeric barrier sheets are effective sound insulators, they are often heavy and expensive to use. This expense is partly due to the fact that large quantities of the sheets must be used in order to cover the surface area of the wall.

EP10726295 discloses a structural member in which internal surfaces are provided with a vibration damping material. DE2726444 discloses a floor joist and floorboard system including a rubber spring member. GB2383005 discloses an intumescent fireproofing coating for wooden structural members. WO2004/031504 discloses a structural member with a sound proofing element that is screwed thereto.

<u>Summary of the Invention</u>

The present invention is based on a discovery that, by attaching a layer of a non-foamed, polymeric barrier sheet to the structural framework, desirable sound insulation can be achieved using a fraction of the sheet material used when covering the surface of a wall. The structural framework usually has a much lower surface area than that of the supported wall, and so the present invention may greatly reduce the cost of materials.

A first aspect of the invention is a structural member comprising a beam having at least one face provided with a sound insulating layer comprising a non-foamed, polymeric material;
characterized in that the sound insulating layer is attached directly to a face of the beam by way of an adhesive, and in that the sound insulating layer forms a surface to which a panel is attached.

A second aspect of the invention is a method of producing a structural member of the invention, which comprises attaching a sound insulating layer comprising a non-foamed, polymeric material to a beam by way of an adhesive.

Another aspect of the invention is a structure comprising a structural member of the invention.

<u>Description of Various Embodiments</u>

The structural member may comprise a wooden or metal beam. Of mention are studs, joists, battens, noggins or blocks. Of particular mention are wooden (e.g. timber) studs, joists, battens, noggins or blocks.

The structural member may comprise a single linear beam or may be of a more complex construction. The member may be of the construction described in US4074498 or WO-A-01/51728 (i.e. an "I-beam"), which may be made of wood or metal. In particular, the member may comprise a plurality of timber joists secured by metal webs, an example of such a structure being an "easi-joist"® system. Preferably, the structural member comprises a wooden beam such as a timber stud or noggin, having at least one face to which the sound insulating layer may be attached. The beam preferably has a circular, hexagonal, square or rectangular or other polygonal cross-section. For a square or rectangular cross-section, the sound insulating layer is preferably attached to at least one pair of opposed faces of the beam.

The sound insulating layer comprises a non-foamed, polymeric material. Suitable materials are known in the art and may be in sheet form. The polymeric material may be loaded with a mineral filler. For example, the sound insulating layer may comprise PVC, or a natural or synthetic rubber, loaded with a filler such as calcium carbonate, baryte, talc, mica, magnesium carbonate or silica. The polymeric material may be obtained by compounding and processing a mixture of, for example, thermoplastic organic polymers and one or more components selected from phthalate esters, mineral fillers, stabilisers and pigments. Preferred materials are the "NoiseStop Barrier Shield" (NoiseStop Systems) and "MTL-DS2" (Vitec).

The thickness of the sound insulating layer will depend on the level of soundproofing required, and will be apparent to those skilled in the art. Usually, the thickness of the layer will be of the order of millimetres. For example, the thickness of the layer may range from about 1 to 10 mm, more preferably from about 2 to 8 mm, more preferably still from about 2 to 6 mm. The sound insulating layer may be in the form of single layer or a laminate, e.g. comprising three layers each of about 2 mm thickness.

The density and weight of the sound insulating layer may be tailored to achieve a certain level of sound insulation. Typically, the density of a 2 mm sheet will be about 5 kg/m$^2$.

The sound insulating layer may be attached directly or indirectly to the beam. Where attachment is indirect, one or intermediate layers may be present which separate the sound insulating layer from the beam. Any of the one or more intermediate layers may also comprise sound insulating materials, for example a foam material. The sound insulating layer itself may be present as an intermediate layer, e.g. sandwiched between a plurality of beams. In one embodiment, the structural member comprises alternating layers of soundproofing material and beams. A particular structural member of the invention comprises two beams and three soundproofing layers, wherein two of the soundproofing layers are preferably present on the exterior of the member.

The sound insulating layer is preferably attached to at least one face of the beam, more preferably to a plurality of opposed faces. The layer is attached using an adhesive.

In a preferred embodiment, the member comprises a wooden beam of substantially square or rectangular cross-section, having a layer of the non-foamed, polymeric material attached to opposed faces of the beam and optionally covered with a layer of a board, for example chipboard, medium density fibreboard (MDF) or plasterboard.

The structural members of the invention may be used in wall or floor structures, in particular in partition wall structures. Depending on the level of insulation required, the members may be used as the sole soundproofing means. Alternatively, they may be used in conjunction with other soundproofing materials and techniques, for example foam-based materials.

The following Example illustrates the invention.

Example

Using a transmission suite, the sound insulating properties of two plasterboard partitions were compared.

Materials

*Sample 1*

Sample 1 comprised a plasterboard partition system weighing 23.4 kg/m$^2$ and having dimensions of 3600 mm wide x 2400 mm high.

A plasterboard partition system 115 mm thick was screw fixed on to a timber frame on the receiver room side of the test aperture. The frame 40 mm deep and 65 mm thick was set on a bead of mastic and screw fixed to the perimeter of the test aperture.

The partition system consisted of 3 double leaf partitions each nominally weighing 67.5 kg. Partition panels were constructed of a self supporting timber frame with vertical timber studs and 'noggins'. Plasterboard panels 2400 mm high x 1200 mm wide x 12.5 mm thick were screw fixed at -150 mm centres on to both sides of each frame construction (the resulting cavities remained unfilled). The outer and central partition panels had different frame dimensions; central frame 2400 mm high x 1162 mm wide, outer frames 2400 mm high x 1219 mm wide. A lip and recess system was used to close the two outer panels with the central panel. The central panel was lipped at both ends, allowing it to overlap and close onto recesses in the outer panels. The outer panels were closed flat onto the aperture walls and sealed with a mastic bead. The central panel was also screw fixed internally to the side panels. A thin timber frame 19 mm deep and 45 mm thick was screw fixed around the perimeter of the partition system on the receiving room side and sealed with mastic. Mastic was used to seal all panel and frame joints.

*Sample 2*

Sample 2 comprised a plasterboard partition system weighing 27.1 kg/m$^2$ and having dimension of 3600 mm wide x 2400 mm high. The system was the same as Sample 1, except that a 6mm layer of MTL-DS2 sound insulating material (Vitec) was applied between plasterboard panels and vertical studs and noggins.

The sound insulating material comprised 3 layers of material bound together and to the internal timber frame work using PVA glue. With the addition of the sound insulating material, each partition panel weighed 78.05kg.

*Equipment*

The testing equipment used was as follows:

Norwegian Electronics 1/3 octave band real time analyser type 840 with in-built random noise generator;

Quad 510 power amplifier;

2 off omni-directional broadband loudspeakers (source room);

2 off broadband loudspeakers (receiving room);

3 off Bruel & Kjaer random incidence condenser microphone type 4166 in the source room;

3 off G.R.A.S. random incidence condenser microphone type 40AP in the source room;

5 off Bruel & Kjaer random incidence condenser microphone type 4166 in the receiving room;

1 off G.R.A.S. random incidence condenser microphones type 40AP in the receiving room;

2 off Norsonic Multiplexers type 834A; and

Yamaha GQ1031BII graphic equalizer.

Test Procedure

The test procedure adopted followed that detailed in BS EN ISO 140: Part 3: 1995, "Laboratory measurements of airborne sound insulation of building elements".

The measurements were performed in a transmission suite comprising two structurally isolated reverberant rooms with a test opening between them in which the test specimen is inserted. The vertical sides of the test aperture were made from dense brick, whilst the base and soffit were made from reinforced concrete. Both rooms had hard surfaces and non-parallel walls. The smaller source room had 4 plywood diffusers and the larger receiving room had 11 plywood diffusers, to increase the diffusivity of the sound field in these areas.

The test involved producing a known sound field in the source room and measuring the resultant sound level difference between the source room and the receiving room with the specimen installed in the test aperture. This level difference was then corrected so as to take into account the equivalent absorption area of the receiving room.

*Generation of Sound Field in the Source Room*

Wide band, random noise from the generator in the real time analyser was amplified and reproduced in the source room using alternately one of two fixed loudspeaker systems, (La and Lb). Omni-directional loudspeakers were used. The output of the generator was set so that the sound pressure level in the receiving room was at least 15dB higher than the background level in any frequency band. The loudspeakers were positioned in the corners of the room and at such a distance from the test specimen that the direct radiation upon it was not dominant.

*Conditions*

The conditions in the source and receiving rooms were as follows:

| | |
|---|---|
| Source room volume: | 112 m³ |
| Receiving room volume: | 225 m³ |
| Sample sizes: | 2400 mm x 3600 mm |
| Temperature in rooms for Sample 1 | 24.1 °C |
| Temperature in rooms for Sample 2 | 23.7 °C |
| Relative humidity in rooms for Sample 1 | 44.4% |
| Relative humidity in rooms for Sample 2 | 45.3% |

*Frequency Range of Measurements*

The sound pressure levels were measured using one-third octave band filters. Measurements covered all the one-third octave bands having centre frequencies in the range from 100Hz to 5000Hz.

*Measurement of Sound Pressure Levels*

Sound pressure levels were measured simultaneously in the source and receiving rooms using loudspeaker La as the sound source. Measurements were recorded at 6 fixed microphone positions in each room, using an averaging time of 16 seconds and the average level in each room was calculated on an energy basis in each one-third octave frequency band. The procedure was then repeated with loudspeaker Lb as the sound source. The overall average level difference in each frequency band was then calculated as the arithmetic average of the two sets of results.

For each set of microphone/loudspeaker positions, the distances separating microphones from other microphones, room boundaries and diffusers, were greater than 0.7m and the distances separating microphones from the sound source and the test specimen were greater than 1m.

*Sound Reduction Index*

The Sound Reduction Index, R, was calculated according to BS EN ISO 140: Part 3: 1995, i.e.

$$R = L_1 - L_2 + 10 \log_{10} \frac{S}{A} \, dB \qquad (1)$$

wherein
$L_1$ is the average sound pressure level in the source room (dB)
$L_2$ is the average sound pressure level in the receiving room (dB)
$S$ is the area of the test specimen (m²)
$A$ is the equivalent absorption area of the receiving room (m²)

*Measurement and Evaluation of the Equivalent Absorption Areas*

The term $A$ in equation (1) was evaluated from the reverberation time and calculated using Sabine's formula:

$$A = \frac{0.16V}{T} \qquad (2)$$

Where:

$V$ is the volume of the receiving room (m³)
$T$ is the reverberation time (s)

The reverberation time of the receiving room was measured using a decay technique. The decays were produced by exciting the room with wide band random noise and stopping the excitation once the room became saturated. The resulting decaying sound field was monitored at 6 fixed microphone positions using a one-third octave band real time analyser. The sound spectrum was sampled at 32 millisecond intervals and stored in memory. Five decays were measured at each microphone position and averaged. The time taken for the sound to decay by 20 dB was measured and tripled to give the reverberation time. The measurements were repeated using an alternative sound source. The results from each set of positions were averaged (ie 60 reverberation decays at each frequency).

Results

The weighted sound reduction indices at one-third octave band intervals $(R_w)$ for Sample 1 and Sample 2 are given in Table 1. $R_w$ was calculated according to ISO 717/1-1-1996.

Table 1

| Frequency (Hz) | $R_w$ (dB) | |
| --- | --- | --- |
| | Sample 1 | Sample 2 |
| 100 | 10.1 | 12.3 |
| 125 | 17.2 | 22.4 |
| 160 | 28.8 | 31.6 |
| 200 | 27.0 | 31.7 |
| 250 | 27.4 | 28.4 |
| 315 | 27.5 | 30.9 |
| 400 | 28.5 | 30.6 |
| 500 | 31.0 | 34.1 |
| 630 | 31.8 | 34.8 |
| 800 | 35.3 | 38.2 |
| 1000 | 37.3 | 41.0 |
| 1250 | 39.6 | 43.6 |
| 1600 | 41.5 | 46.7 |
| 2000 | 41.1 | 47.1 |
| 2500 | 35.7 | 41.8 |
| 3150 | 33.5 | 40.2 |
| 4000 | 37.9 | 47.7 |
| 5000 | 41.3 | 51.7 |

Using Sample 2 as the partition resulted in significantly greater sound reduction (of between about 2 to 10 dB) compared with Sample 1. The degree of sound insulation achieved using Sample 2 is comparable with that of conventional systems in which sheets of non-foamed, polymeric material are laid over the plasterboard.

**Claims**

1. A structural member comprising a beam having at least one face provided with a sound insulating layer comprising a non-foamed, polymeric material;
   **characterized in that** the sound insulating layer is attached directly to a face of the beam by way of an adhesive, and **in that** the sound insulating layer forms a surface to which a panel is attached.

2. A member according to claim 1, wherein the member comprises a wooden beam.

3. A member according to claim 1 or claim 2, wherein the member comprises a metal beam.

**4.** A member according to any preceding claim, wherein the polymeric material comprises a mineral filler.

**5.** A member according to any preceding claim, wherein the polymeric material is an elastomeric material.

**6.** A member according to any preceding claim, wherein the polymeric material comprises rubber or PVC.

**7.** A member according to any preceding claim, wherein the sound insulating layer is attached to opposed faces of the beam.

**8.** A method of producing a structural member of claim 1, which comprises attaching a sound insulating layer comprising a non-foamed, polymeric material to a beam by way of an adhesive.

**9.** A method according to claim 8, wherein the beam or material is as defined in any of claims 1 to 7.

**10.** A structure comprising a structural member of any of claims 1 to 7.

**11.** A structure according to claim 10, which is a wall or floor structure.

**12.** A structure according to claim 11, which is a partition wall structure.

**13.** A structure according to any of claims 10 to 12, which comprises plasterboard.


**Patentansprüche**

**1.** Strukturelement mit einem Balken, der zumindest eine mit einer geräuschdämmenden Schicht versehene Seite aufweist, wobei die geräuschdämmende Schicht ein nicht geschäumtes Polymermaterial umfasst;
**dadurch gekennzeichnet, dass** die geräuschdämmende Schicht auf eine Seite des Balkens mit Hilfe eines Klebstoffs direkt aufgebracht ist, und dass die geräuschdämmende Schicht eine Fläche bildet, auf der eine Tafel aufgebracht ist.

**2.** Element nach Anspruch 1, wobei das Element einen Holzbalken aufweist.

**3.** Element nach Anspruch 1 oder 2, wobei das Element einen Metallbalken aufweist.

**4.** Element nach einem vorhergehenden Anspruch, wobei das Polymermaterial einen mineralischen Füllstoff aufweist.

**5.** Element nach einem vorhergehenden Anspruch, wobei das Polymermaterial ein Elastomermaterial ist.

**6.** Element nach einem vorhergehenden Anspruch, wobei das Polymermaterial Gummi oder PVC umfasst.

**7.** Element nach einem vorhergehenden Anspruch, wobei die geräuschdämmende Schicht an einander gegenüberliegenden Seiten des Balkens angebracht ist.

**8.** Verfahren zum Herstellen eines Strukturelements nach Anspruch 1, das aufweist: Anbringen einer geräuschdämmenden Schicht, die ein nicht geschäumtes Polymermaterial umfasst, an einem Balken mittels eines Klebstoffs.

**9.** Verfahren nach Anspruch 8, wobei der Balken oder das Material in einem der Ansprüche 1 bis 7 definiert ist.

**10.** Struktur mit einem Strukturelement nach einem der Ansprüche 1 bis 7.

**11.** Struktur nach Anspruch 10, die eine Wandstruktur oder eine Bodenstruktur ist.

**12.** Struktur nach Anspruch 11, die eine Trennwandstruktur ist.

**13.** Struktur nach einem der Ansprüche 10 bis 12, die eine Putzdiele umfasst.

**Revendications**

**1.** Elément de structure comprenant une poutre ayant au moins une face pourvue d'isolation phonique comprenant un matériau polymère qui n'est pas en mousse, **caractérisé en ce que** la couche d'isolation phonique est fixée directement sur une face de la poutre au moyen d'un adhésif, et **en ce que** la couche d'isolation phonique forme une surface à laquelle un panneau est attaché.

**2.** Elément de structure selon la revendication 1, **caractérisé en ce que** l'élément comporte une poutre en bois.

**3.** Elément de structure selon la revendication 1 ou 2, **caractérisé en ce que** l'élément comporte une poutre métallique.

**4.** Elément de structure selon l'une des revendications précédentes, **caractérisé en ce que** le matériau polymère comporte une charge minérale.

**5.** Elément de structure selon l'une des revendications précédentes, **caractérisé en ce que** le matériau polymère est un matériau élastomère.

**6.** Elément de structure selon l'une des revendications précédentes, **caractérisé en ce que** le matériau polymère comporte du caoutchouc ou de PVC.

**7.** Elément de structure selon l'une des revendications précédentes, **caractérisé en ce que** la couche d'isolation phonique est fixée aux faces opposées de la poutre.

**8.** Procédé pour la fabrication d'un élément de structure selon la revendication 1, qui comporte la fixation d'une couche d'isolation phonique comprenant un matériau polymère qui n'est pas en mousse, à une poutre au moyen d'un adhésif.

**9.** Procédé selon la revendication 8, **caractérisé en ce que** la poutre ou le matériau sont tels que définis dans l'une des revendications 1 à 7.

**10.** Structure comprenant un élément de structure selon l'une des revendications 1 à 7.

**11.** Structure selon la revendication 10, **caractérisée en ce qu'**elle est constituée d'une paroi ou d'une structure de plancher.

**12.** Structure selon la revendication 11, **caractérisée en ce qu'**elle est constituée d'une structure de paroi de séparation.

**13.** Structure selon l'une des revendications 10 à 12, **caractérisée en ce qu'**elle comporte des panneaux en plâtre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2287086 A
- GB 2375358 A
- US 5639545 A
- EP 10726295 A
- DE 2726444
- GB 2383005 A
- WO 2004031504 A
- US 4074498 A
- WO 0151728 A